(19) Europäisches Patentamt
European Patent Office
Office européen des brevets

(11) **EP 4 696 805 A1**

(12) **EUROPEAN PATENT APPLICATION**
published in accordance with Art. 153(4) EPC

(43) Date of publication:
**18.02.2026 Bulletin 2026/08**

(21) Application number: 24788800.1

(22) Date of filing: **11.04.2024**

(51) International Patent Classification (IPC):
*C23C 2/06* (2006.01)    *C22C 18/00* (2006.01)
*C22C 18/04* (2006.01)    *C23C 2/02* (2006.01)
*C23C 2/26* (2006.01)

(52) Cooperative Patent Classification (CPC):
**C22C 18/00; C22C 18/04; C23C 2/06;** C23C 2/02;
C23C 2/26

(86) International application number:
**PCT/JP2024/014675**

(87) International publication number:
**WO 2024/214778 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.04.2023 JP 2023064063**

(71) Applicant: NIPPON STEEL CORPORATION
Tokyo 100-8071 (JP)

(72) Inventors:
• **MITSUNOBU, Takuya**
Tokyo 100-8071 (JP)
• **URANAKA, Masaaki**
Tokyo 100-8071 (JP)
• **TAKEBAYASHI, Hiroshi**
Tokyo 100-8071 (JP)

(74) Representative: **Vossius & Partner
Patentanwälte Rechtsanwälte mbB
Siebertstrasse 3
81675 München (DE)**

(54) **PLATED STEEL MATERIAL**

(57)    The plated steel material includes a steel material and a plated layer disposed on a surface of the steel material, and
the plated layer has a predetermined chemical composition, and the plated layer has a diffraction intensity obtained from a result of X-ray diffraction measurement, the diffraction intensity satisfying a predetermined formula.

## FIG. 1

**Description**

TECHNICAL FIELD

The present invention relates to a plated steel material. Priority is claimed on Japanese Patent Application No. 2023-064063, filed April 11, 2023, the content of which is incorporated herein by reference.

BACKGROUND ART

A steel material on the surface of which a Zn-plated layer containing Al and Mg is formed (a Zn-Al-Mg-based plated steel material) has exceptional corrosion resistance. Therefore, Zn-Al-Mg-based plated steel materials are widely used, for example, as a material for structural members required to have corrosion resistance, such as building materials.
For example, Patent Document 1 describes a plated steel sheet including: a steel sheet; and a plated layer formed on a surface of the steel sheet, in which the plated layer contains Al: 0 to 90 mass% and Mg: 0 to 10 mass% in terms of average composition, and the remainder containing Zn and an impurity; and a pattern part disposed so as to have a certain shape and a non-pattern part are formed on the plated layer, the pattern part and the non-pattern part each include one or two of a first region and a second region, the absolute value of the difference between the area fraction of the first region in the pattern part and the area fraction of the first region in the non-pattern part is 30% or more, and the first region has an orientation ratio of 3.5 or more and the second region has an orientation ratio of less than 3.5.
Patent Document 2 describes a Zn-Al-Mg-based plated steel sheet including: a steel sheet; and a plated layer containing Al in an amount of 4 mass% or more and 22 mass% or less, Mg in an amount of 1 mass% or more and 5 mass% or less, and the remainder containing Zn and an unavoidable impurity, in which the cross section of the plated layer that is parallel to the surface of the plated layer has a diffraction intensity ratio I(200)/I(111) of 0.8 or more, which is a ratio of X-ray diffraction intensity I(200) from the (200) plane of the Al phase to X-ray diffraction intensity I(111) from the (111) plane of the Al phase.
In recent years, plated steel materials for building materials that are used for roofs, wall materials, and the like have been required to be exceptional in red rust resistance for suppressing the occurrence of red rust in base metal and base metal corrosion resistance for suppressing an increase in the corrosion depth of base metal when base metal is exposed. However, in the related art, improvement of both red rust resistance and base metal corrosion resistance has hardly been studied.
Patent Document 1 discloses that, when the first region means a region having an intensity ratio of 3.5 or more between (0002) plane diffraction peak intensity $I_{0002}$ and (10-11) plane diffraction peak intensity $I_{10-11}$ in the Zn phase and the second region means a region having the intensity ratio of which is less than 3.5, the difference between the area fraction of the first region in the pattern part and the area fraction of the first region in the non-pattern part is set to be 30% or more to intentionally express characters, designs, and the like on the surface of the plated layer. However, red rust resistance and base metal corrosion resistance have not been examined.
Patent Document 2 discloses that, by controlling the orientation of the Al phase in the plated layer, the plated layer has an external appearance like a pear skin, which has fine texture and a lot of smooth glossy parts. However, red rust resistance and base metal corrosion resistance have not been examined.

Citation List

Patent Document

Patent Document 1: Japanese Unexamined Patent Application, First Publication No. 2021-85086
Patent Document 2: PCT International Publication No. WO 2011/001662

SUMMARY OF INVENTION

Technical Problem

The present invention has been made in view of the above circumstances, and an object thereof is to provide a plated steel material having exceptional red rust resistance and base metal corrosion resistance.

Solution to Problem

In order to achieve the above object, the present invention adopts the constitutions described below.

[1] A plated steel material including:

a steel material; and
a plated layer on the steel material,
in which the plated layer has a chemical composition containing, in terms of mass%,
Al: 6.0 to 30.0%,
Mg: 3.0 to 15.0%,
Fe: 0.01 to 15.00%,
Si: 0 to 2.0%,
Ca: 0 to 2.00%,
one or two of La and Ce: 0.005 to 0.500% in total,
one or two or more elements selected from an element group of Sb: 0 to 0.50%, Pb: 0 to 0.50%, Cu: 0 to 1.00%, Sn: 0 to 1.00%, Ti: 0 to 1.00%, Cr: 0 to 1.00%, Nb: 0 to 1.00%, Zr: 0 to 1.00%, Ni: 0 to 1.000%, Mn: 0 to 1.00%, Mo: 0 to 1.00%, Ag: 0 to 1.00%, Li: 0 to 1.00%, B: 0 to 0.500%, Y: 0 to 0.50%, P: 0 to 0.50%, Sr: 0 to 0.50%, Co: 0 to 0.500%, Bi: 0 to 0.500%, In: 0 to 0.50%, V: 0 to 0.500%, and W: 0 to 0.50%, in an amount of 0 to 5.0% in total, and
the remainder: Zn and an impurity, and
the plated layer has a diffraction intensity obtained from a result of X-ray diffraction measurement, the diffraction intensity satisfying formula (1) below:

$$0.15 \leq I(100)_{Zn}/\{I(002)_{Zn} + I(101)_{Zn} + I(100)_{Zn}\} \leq 3.00 \quad \cdots \quad (1)$$

in the formula (1), $I(100)_{Zn}$ represents an $\eta$-Zn phase (100) diffraction intensity, $I(002)_{Zn}$ represents an $\eta$-Zn phase (002) diffraction intensity, $I(101)_{Zn}$ represents an $\eta$-Zn phase (101) diffraction intensity, and $I(100)_{Zn}$ represents an $\eta$-Zn phase (100) diffraction intensity.

[2] The plated steel material according to [1], in which Al and Mg in the plated layer are Al: 10.0 to 25.0% and Mg: 4.5 to 15.0%, respectively.
[3] The plated steel material according to [1] or [2], in which

a total of one or two of La and Ce in the plated layer is 0.010 to 0.500%, and
a number of one or more of a LaCe-containing intermetallic compound phase, a La-containing intermetallic compound phase, and a Ce-containing intermetallic compound phase in a 200 $\mu$m $\times$ 200 $\mu$m visual field of a surface structure of the plated layer in a plane view is 1 or more.

[4] The plated steel material according to any one of [1] to [3], in which

a total of one or two of La and Ce in the plated layer is 0.050 to 0.500%, and
a number of one or more of a LaCe-containing intermetallic compound phase, a La-containing intermetallic compound phase, and a Ce-containing intermetallic compound phase in a 200 $\mu$m $\times$ 200 $\mu$m visual field of a surface structure of the plated layer in a plane view is 3 or more.

[5] The plated steel material according to any one of [1] to [4], in which an area fraction of [$\alpha$/MgZn$_2$ eutectic structure] contained in a surface structure of the plated layer in a plane view is 5 to 70%.
[6] The plated steel material according to any one of [1] to [5] claim 5, in which a diffraction intensity of the plated layer obtained from a result of X-ray diffraction measurement satisfies formula (2) below:

$$0.25 \leq I(100)_{Zn}/\{I(002)_{Zn} + I(101)_{Zn} + I(100)_{Zn}\} \leq 3.00 \quad \cdots \quad (2).$$

[7] The plated steel material according to any one of [1] to [6], in which

Sn in the plated layer is Sn: 0.05 to 0.50%, in terms of mass%, and
a Mg$_2$Sn phase is detected by a result of X-ray diffraction measurement of the plated layer.

Advantageous Effects of Invention

According to the present invention, it is possible to provide a plated steel material having exceptional red rust resistance and base metal corrosion resistance.

BRIEF DESCRIPTION OF DRAWING

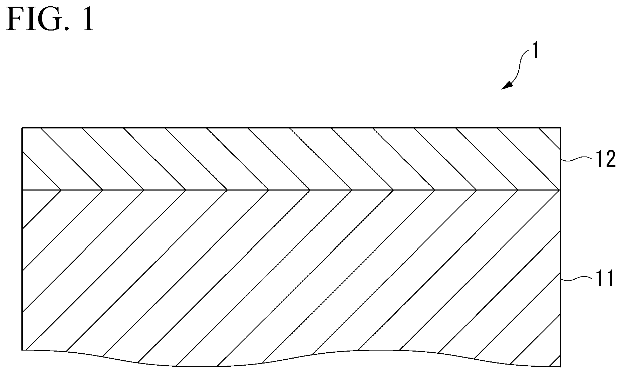

[FIG. 1] A schematic cross-sectional view of a plated steel material according to an embodiment of the present invention.

DESCRIPTION OF EMBODIMENTS

The sacrificial corrosion resistance of a plated layer is achieved by forming a plated layer containing an element (for example, Zn, Mg, and the like) having a higher ionization tendency than that of the base metal on the surface of a steel material and corroding the plated layer preferentially with respect to the base metal.

Therefore, the present inventors have conducted intensive studies in order to improve the sacrificial corrosion resistance of a Zn-plated layer containing Al and Mg. An $\eta$-Zn phase contained in the plated layer has a hexagonal crystal structure, and various crystal orientation planes are included therein. The corrosion resistance of these crystal orientation planes is not uniform in all of the orientation planes. For example, since the (002) plane of the $\eta$-Zn phase is a dense crystal orientation plane in which the atomic density of Zn is relatively high, it is considered that Zn itself does not easily dissolve relatively, and the corrosion resistance of Zn itself is relatively high. On the other hand, since the (100) plane of the $\eta$-Zn phase is a crystal orientation plane in which the atomic density of Zn is lower than that of the (002) plane, Zn itself easily dissolves relatively, and the corrosion resistance of Zn itself is low, but corrosion of base metal is protected by a corrosion product generated along with corrosion of Zn, and it is thus considered that sacrificial corrosion resistance with respect to the base metal is high. Therefore, it was considered that the sacrificial corrosion resistance, specifically, red rust resistance and base metal corrosion resistance, of the Zn plated layer containing Al and Mg can be improved by orientating the (100) plane of the $\eta$-Zn phase parallel to the surface of the plated layer.

Therefore, the present inventors attempted to orientate the (100) plane of the $\eta$-Zn phase contained in the plated layer parallel to the surface of the plated layer. When the Zn plated layer containing Al and Mg is solidified from a molten state, an $\alpha$ phase crystallizes first, then, a $MgZn_2$ phase or an $\eta$-Zn phase crystallizes, and furthermore, a ternary eutectic structure including the $\alpha$ phase, the $MgZn_2$ phase, and the $\eta$-Zn phase is generated. It was found that when a dendritic $\alpha$ phase crystallizes a lot at this time, the ternary eutectic structure including the $\eta$-Zn phase is oriented in a random direction. Therefore, it was found that when the surface of a steel material is roughened, one or both of La and Ce are incorporated into a plated layer, and furthermore, cooling conditions are controlled, crystallization of an $\alpha$ phase is suppressed, and crystallization of a ternary eutectic structure proceeds from the vicinity of the interface between the plated layer and base metal as a starting point, and as a result, the (100) plane of an $\eta$-Zn phase contained in the ternary eutectic structure is oriented to be parallel to the surface of the plated layer.

Hereinafter, the plated steel material according to an embodiment of the present invention will be described. A plated steel material of the present embodiment includes a steel material and a plated layer disposed on a surface of the steel material, the plated layer has a chemical composition containing, in terms of mass%, Al: 6.0 to 30.0%, Mg: 3.0 to 15.0%, Fe: 0.01 to 15.00%, Si: 0 to 2.0%, and Ca: 0 to 2.00%, containing one or two of La and Ce: 0.005 to 0.500% in total, and containing one or two or more elements selected from the element group of Sb: 0 to 0.50%, Pb: 0 to 0.50%, Cu: 0 to 1.00%, Sn: 0 to 1.00%, Ti: 0 to 1.00%, Cr: 0 to 1.00%, Nb: 0 to 1.00%, Zr: 0 to 1.00%, Ni: 0 to 1.000%, Mn: 0 to 1.00%, Mo: 0 to 1.00%, Ag: 0 to 1.00%, Li: 0 to 1.00%, B: 0 to 0.500%, Y: 0 to 0.50%, P: 0 to 0.50%, Sr: 0 to 0.50%, Co: 0 to 0.500%, Bi: 0 to 0.500%, In: 0 to 0.50%, V: 0 to 0.500%, and W: 0 to 0.50%, in an amount of 0 to 5.0% in total, and the remainder: Zn and an impurity, and the plated layer has a diffraction intensity obtained from a result of X-ray diffraction measurement, the diffraction intensity satisfying the following formula (1). The surface of the steel material mentioned herein refers to the interface between the plated layer and the steel material.

$$0.15 \le I(100)_{Zn}/\{I(002)_{Zn} + I(101)_{Zn} + I(100)_{Zn}\} \le 3.00 \quad \cdots \quad (1)$$

In the formula (1), $I(100)_{Zn}$ represents the diffraction intensity of an $\eta$-Zn phase (100) plane, $I(002)_{Zn}$ represents the diffraction intensity of an $\eta$-Zn phase (002) plane, $I(101)_{Zn}$ represents the diffraction intensity of an $\eta$-Zn phase (101) plane, and $I(100)_{Zn}$ represents the diffraction intensity of an $\eta$-Zn phase (100) plane.

In the following description, the expression "%" of the content of each element in a chemical composition means "mass%". The content of an element in the chemical composition may be referred to as an element concentration (for example, Zn concentration, Mg concentration, and the like). The "red rust resistance" indicates a property of suppressing the generation of red rust in a steel material at a portion where steel material is exposed (for example, an end surface portion where the plated steel material is cut, a portion where the plated layer is cracked due to processing, and a portion where steel material is exposed due to peeling of the plated layer). The "base metal corrosion resistance" indicates a property of an increase in corrosion depth being suppressed when a steel material corrodes in the portion where the steel material is exposed. The "flat portion corrosion resistance" indicates a property of the plated layer (specifically, Zn-Al-Mg alloy layer) itself being less likely to corrode. The "plated layer" means a plating film manufactured by the so-called hot-dip galvanizing.

As illustrated in FIG. 1, a plated steel material 1 according to the present embodiment includes a steel material 11. The shape of steel material 11 is not particularly limited, and an example of steel material 11 is a steel sheet. In addition, steel material 11 may be, for example, a formed base steel material, such as a steel pipe, a civil engineering and construction material (fence culvert, corrugated pipe, drain channel lid, splash preventing plate, bolt, wire mesh, guard rail, water stop wall, and the like), a home electric appliance member (a housing of an outdoor unit of an air conditioner, or the like), and a vehicle component (a suspension member, or the like). The forming is, for example, various deformation processing methods, such as pressing, roll forming, and bending.

The material of steel material 11 is not particularly limited. The steel material 11 may be, for example, various steel materials, such as general steel, Al-killed steel, ultra low carbon steel, high carbon steel, various high tensile strength steels, and some high alloy steels (a steel containing a reinforcing element such as Ni, Cr, etc.). The steel material 11 may be a hot-rolled steel sheet, a hot-rolled steel strip, a cold-rolled steel sheet, a cold-rolled steel strip, and the like described in JIS G 3302: 2010. The manufacturing method of the steel sheet (hot rolling method, pickling method, cold rolling method, or the like), specific manufacturing conditions thereof, and the like are also not particularly limited.

The steel material 11 that serves as a plating original sheet may be a pre-plated steel material pre-plated on the surface of the steel material 11. An example of the pre-plated steel material is an Ni pre-plated steel material having a Ni plating on the steel material 11. The pre-plated steel material is obtained by, for example, electrolytic treatment or displacement plating. The electrolytic treatment is performed by immersing a base steel material in a sulfuric acid bath or a chloride bath containing metal ions of various pre-plating compositions to perform an electrolytic treatment. The displacement plating is performed by immersing a base steel material in an aqueous solution containing metal ions of various pre-plating compositions and having a pH adjusted with sulfuric acid to substitute and deposit the metal.

The plated steel material 1 according to the present embodiment includes a plated layer 12 on the steel material 11. In the plated steel material 1 according to the present embodiment, the plated layer 12 is mainly made of a Zn-Al-Mg alloy layer due to the chemical composition described later. In addition, the plated layer 12 of the plated steel material 1 according to the present embodiment may include an Fe-Al-based interfacial alloy layer between the steel material 11 and the Zn-Al-Mg alloy layer. That is, the plated layer 12 may have a single-layer structure of the Zn-Al-Mg alloy layer or a laminate structure including the Zn-Al-Mg alloy layer and the Fe-Al-based interfacial alloy layer. In addition, the Fe-Al-based interfacial alloy layer may contain Ni.

The plated layer according to the present embodiment is made of, as the chemical composition, Zn and other alloying elements. The chemical composition of the plated layer will be described in detail below. Note that the elements the concentration of which has a lower limit of 0% are not essential for solving the problem of the plated steel material according to the present embodiment but are optional elements which are allowed to be included in the plating layer for the purpose of, for example, improving characteristics.

<Al: 6.0 to 30.0%>

Al forms an $\alpha$ phase that is a solid solution with Zn, and contributes to improvement in flat portion corrosion resistance, sacrificial corrosion resistance, and workability. Therefore, the Al concentration is set to 6.0% or more. The Al concentration may be set to 10.0% or more, 12.0% or more, or 15.0% or more. On the other hand, when there is excess Al, the Mg concentration and the Zn concentration relatively decrease, and red rust resistance and base metal corrosion resistance deteriorate. Therefore, the Al concentration is set to 30.0% or less. The Al concentration may be set to 28.0% or less, 25.0% or less, or 20.0% or less.

<Mg: 3.0 to 15.0%>

Mg is an element essential for securing flat portion corrosion resistance, red rust resistance, and base metal corrosion resistance. Therefore, the Mg concentration is set to 3.0% or more. The Mg concentration may be set to 4.5% or more or 6.0% or more. On the other hand, when the Mg concentration is excessive, workability, particularly powdering properties, may deteriorate, and flat portion corrosion resistance may further deteriorate. Therefore, the Mg concentration is set to 15.0% or less. The Mg concentration may be set to 12.0% or less, 10.0% or less, or 8.0% or less.

<Fe: 0.01% to 15.00%>

Fe may be contained in the plated layer in an amount of 0.01% or more. It has been confirmed that, when the Fe concentration is 15.00% or less, the performance of the plated layer is not adversely affected. The Fe concentration may be set to, for example, 0.05% or more, 0.10% or more, 0.50% or more, or 1.00% or more. The Fe concentration may be set to, for example, 10.00% or less, 5.00% or less, 2.00% or less, or 1.00% or less. Since Fe may be mixed from the steel material, the Fe concentration may be 0.05% or more.

<Si: 0% to 2.0%>

The Si concentration may be 0%. On the other hand, Si contributes to improvement in flat portion corrosion resistance. Therefore, the Si concentration may be set to 0.05% or more, 0.1% or more, 0.2% or more, or 0.5% or more. On the other hand, when the Si concentration is excessive, flat portion corrosion resistance, red rust resistance, and base metal corrosion resistance deteriorate. Therefore, the Si concentration is set to 2.0% or less. The Si concentration may be set to 1.5% or less, 1.0% or less, or 0.5% or less.

<Ca: 0% to 2.00%>

The Ca concentration may be 0%. On the other hand, Ca is an element capable of adjusting the optimum Mg elution amount for imparting flat portion corrosion resistance. Therefore, the Ca concentration may be 0.05% or more, 0.10% or more, or 0.50% or more. On the other hand, when the Ca concentration is excessive, flat portion corrosion resistance and workability deteriorate. Therefore, the Ca concentration is set to 2.00% or less. The Ca concentration may be set to 1.00% or less, 0.50% or less, or 0.10% or less.

<Total of one or two of La and Ce: 0.005 to 0.500%>

Any one or both of La and Ce are contained in the plated layer and thereby contribute to improvement in red rust resistance and base metal corrosion resistance. When the total of La and Ce is less than 0.005%, red rust resistance and base metal corrosion resistance cannot be improved. In addition, when the total of La and Ce exceeds 0.500%, flat portion corrosion resistance deteriorates. Therefore, the total of one or two of La and Ce is set to 0.005 to 0.500%. The total of La and Ce may be 0.008% or more, 0.010% or more, or 0.050% or more. In addition, the total of La and Ce may be 0.200% or less or 0.100% or less. When La and Ce are contained, crystallization of the $\alpha$ phase is suppressed when the plated layer is solidified, whereby it becomes easy for the (100) plane of the $\eta$-Zn phase contained in a large amount in the ternary eutectic structure to be oriented to be parallel to the surface of the plated layer. Therefore, it is considered that red rust resistance and base metal corrosion resistance improve.

Furthermore, the plated layer according to the present embodiment may contain one or two or more elements selected from the element group of Sb: 0 to 0.50%, Pb: 0 to 0.50%, Cu: 0 to 1.00%, Sn: 0 to 1.00%, Ti: 0 to 1.00%, Cr: 0 to 1.00%, Nb: 0 to 1.00%, Zr: 0 to 1.00%, Ni: 0 to 1.000%, Mn: 0 to 1.00%, Mo: 0 to 1.00%, Ag: 0 to 1.00%, Li: 0 to 1.00%, B: 0 to 0.500%, Y: 0 to 0.50%, P: 0 to 0.50%, Sr: 0 to 0.50%, Co: 0 to 0.500%, Bi: 0 to 0.500%, In: 0 to 0.50%, V: 0 to 0.500%, and W: 0 to 0.50%. The total of these elements is 0 to 5.0%. When the total exceeds 5.0%, flat portion corrosion resistance, red rust resistance, and base metal corrosion resistance may deteriorate. In addition, these elements are optional additive elements, and the total amount may be thus 0%.

<Sb, Pb: 0 to 0.50% each>

The concentration of Sb and Pb may be 0%. On the other hand, Sb and Pb contribute to improvement in red rust resistance and base metal corrosion resistance. Therefore, the concentration of each of Sb and Pb may be set to 0.05% or more, 0.10% or more, or 0.15% or more. On the other hand, when the concentration of Sb and Pb is excessive, flat portion corrosion resistance deteriorates. Therefore, the concentration of each of Sb and Pb is set to 0.50% or less. The concentration of each of Sb and Pb may be set to 0.40% or less, 0.30% or less, or 0.25% or less.

<Cu, Ti, Cr, Nb, Zr, Mn, Mo, Ag, and Li: 0 to 1.00% each>

The concentration of each of Cu, Ti, Cr, Nb, Zr, Mn, Mo, Ag, and Li may be 0%. On the other hand, these contribute to improvement in red rust resistance and base metal corrosion resistance. Therefore, the concentration of each of Cu, Ti, Cr, Nb, Zr, Mn, Mo, Ag, and Li may be set to 0.05% or more, 0.08% or more, or 0.10% or more. On the other hand, when the concentration of Cu, Ti, Cr, Nb, Zr, Mn, Mo, Ag, and Li is excessive, flat portion corrosion resistance deteriorates. Therefore, the concentration of each of Cu, Ti, Cr, Nb, Zr, Mn, Mo, Ag, and Li is set to 1.00% or less. The concentration of each of Cu, Ti, Cr, Nb, Zr, Mn, Mo, Ag, and Li may be set to 0.80% or less, 0.70% or less, or 0.60% or less.

<Ni: 0 to 1.000%>

The Ni concentration may be each 0%. On the other hand, these contribute to improvement in red rust resistance and base metal corrosion resistance. Therefore, the Ni concentration may be set to 0.050% or more, 0.080% or more, or 0.100% or more. On the other hand, when the Ni concentration is excessive, flat portion corrosion resistance deteriorates. Therefore, the Ni concentration is set to 1.000% or less. The Ni concentration may be set to 0.800% or less, 0.700% or less, or 0.600% or less.

<Sn: 0 to 1.00%>

The Sn concentration may be 0%. On the other hand, Sn is an element that forms an intermetallic compound with Mg and improves the red rust resistance and base metal corrosion resistance of the plated layer. Therefore, the Sn concentration may be set to 0.01% or more, 0.05% or more, or 0.10% or more. However, when the Sn concentration is excessive, flat portion corrosion resistance deteriorates. Therefore, the Sn concentration is set to 1.00% or less. The Sn concentration may be set to 0.50% or less, 0.30% or less, or 0.20% or less.

<B: 0 to 0.500%>

The B concentration may be 0%. On the other hand, B contributes to improvement in red rust resistance and base metal corrosion resistance. Therefore, the B concentration may be each set to 0.100% or more, 0.150% or more, or 0.200% or more. On the other hand, when the B concentration is excessive, flat portion corrosion resistance deteriorates. Therefore, the B concentration is each 0.500% or less. The B concentration may be each set to 0.400% or less or 0.300% or less.

<Y, P, and Sr: 0 to 0.50% each>

The concentration of each of Y, P, and Sr may be 0%. On the other hand, Y, P, and Sr contribute to improvement in red rust resistance and base metal corrosion resistance. Therefore, the concentration of each of Y, P, and Sr may be set to 0.10% or more, 0.15% or more, or 0.20% or more. On the other hand, when the concentration of each of Y, P, and Sr is excessive, flat portion corrosion resistance deteriorates. Therefore, the concentration of each of B, Y, P, and Sr is set to 0.50% or less. The concentration of each of Y, P, and Sr may be set to 0.40% or less or 0.30% or less.

<Co, Bi, and V: 0 to 0.500% each>

The concentration of each of Co, Bi, and V may be 0%. On the other hand, Co, Bi, and V contribute to improvement in red rust resistance and base metal corrosion resistance. Therefore, the concentration of each of Co, Bi, and V may be set to 0.100% or more, 0.150% or more, or 0.200% or more, respectively. On the other hand, when the concentration of each of Co, Bi, and V is excessive, flat portion corrosion resistance deteriorates. Therefore, the concentration of each of Co, Bi, and V is set to 0.500% or less. The concentration of each of Co, Bi, and V may be set to 0.400% or less or 0.300% or less.

<In and W: 0 to 0.50% each>

The concentration of each of In and W may be 0%. On the other hand, In and W contribute to improvement in red rust resistance and base metal corrosion resistance. Therefore, the concentration of each of In and W may be set to 0.10% or more, 0.15% or more, or 0.20% or more, respectively. On the other hand, when the concentration of each of In and W is excessive, flat portion corrosion resistance deteriorates. Therefore, the concentration of each of In and W is set to 0.50% or less. The concentrations of In and W may be set to 0.40% or less and 0.30% or less, respectively.

<Remainder: Zn and impurity>

The remainder in the components of the plated layer according to the present embodiment includes Zn and an impurity. Zn is an element that brings flat portion corrosion resistance, red rust resistance, and base metal corrosion resistance to the plated layer. In the present embodiment, the impurity means an impurity mixed from a manufacturing environment or the like and an impurity allowed to an extent that the characteristics of the plated steel material according to the present embodiment are not adversely affected. For example, in the plated layer, a small amount of components other than Fe may be mixed as the impurity due to mutual atomic diffusion between the base steel material and the plating bath.

The chemical components of the plated layer are measured by the following method. For example, the plated steel material is cut into a size of 30 mm × 30 mm to obtain a measurement sample. Next, an acid solution is obtained by peeling off and dissolving the plated layer in the measurement sample using a 10% hydrochloric acid aqueous solution to which 0.06 mass% of an inhibitor (manufactured by ASAHI Chemical Co., Ltd., IBIT 710K) for suppressing corrosion of the steel material has been added. Next, the obtained acid solution is subjected to ICP analysis. Thereby, the chemical composition of the plated layer can be determined. Upon cutting the plated steel material, it is preferable to avoid the end portion and the weld of the plated steel material. The type of the acid is not particularly limited as long as the acid can dissolve the plated layer. For example, the acid is 10 vol% HCl. The chemical composition is measured three times by the above-described means, and the average thereof is taken as the chemical composition of the plated layer.

Next, the metallographic structure of the plated layer will be described.

The plated layer contains an $\alpha$ phase and a $MgZn_2$ phase. The $\alpha$ phase is a phase containing a fine Al phase and a fine Zn phase. Part of the $\alpha$ phase and the $MgZn_2$ phase may form a lamellar binary eutectic structure ([eutectic structure of $\alpha$ phase/$MgZn_2$]). When [eutectic structure of $\alpha$ phase/$MgZn_2$] is contained, the flat portion corrosion resistance of the plated layer further improves. However, when the plated layer contains a large amount of [eutectic structure of $\alpha$ phase/$MgZn_2$] due to excessive precipitation of the $\alpha$ phase and the $MgZn_2$ phase, the proportion of the $\eta$-Zn phase becomes relatively small, and red rust resistance and base metal corrosion resistance deteriorate. Therefore, [eutectic structure of $\alpha$ phase/$MgZn_2$] may be in a range of 70% or less, in a range of 5 to 70%, or in a range of 10 to 70% in terms of area fraction. [Eutectic structure of $\alpha$ phase/$MgZn_2$] may be 0% or more than 0%.

In addition, the plated layer of the present embodiment contains an $\eta$-Zn phase in addition to the $\alpha$ phase and the $MgZn_2$ phase. At least part of the $\eta$-Zn phase forms a ternary eutectic structure together with the $\alpha$ phase and the $MgZn_2$ phase. In addition, the $\eta$-Zn phase may be contained in the plated layer as a massive $\eta$-Zn phase.

In addition, when 0.05 to 0.5% of Sn is contained in the plated layer, the $Mg_2Sn$ phase is reliably contained in the plated layer. The $Mg_2Sn$ phase may be contained even when the amount of Sn is 0.05% or less. Since the amount of the $Mg_2Sn$ phase is small, the presence thereof is confirmed by X-ray diffraction measurement. When the plated layer contains the $Mg_2Sn$ phase therein, the plated steel material has more improved red rust resistance.

When a peak is detected at 23.4 ± 0.3° in the X-ray diffraction measurement with K$\alpha$ rays from a Cu tube, it is determined that the Mg2Sn phase is present. X-ray diffraction measurement is performed using an X-ray diffractometer (manufactured by Rigaku Corporation (model number RINT-TTR III) under the conditions of X-ray output: 50 kV and 300 mA; copper target; goniometer TTR (horizontal goniometer); slit width of K$\beta$ filter: 0.05 mm; longitudinal limiting slit width: 2 mm; light receiving slit width: 8 mm; and light receiving slit 2: open, and under the measurement conditions of scan speed: 5 deg./min; step width: 0.01 deg; and scan axis: 2$\theta$ (5 to 90°).

Furthermore, the plated layer may contain one or more of a LaCe-containing intermetallic compound phase, a La-containing intermetallic compound phase, and a Ce-containing intermetallic compound phase as described later.

The plated layer may contain a phase other than the above-described phases as the remainder. For example, an Al-Ca-Si phase or the like may be contained.

Next, the crystal orientation of the $\eta$-Zn phase will be described.

In the plated layer of the present embodiment, X-ray diffraction intensity obtained from the result of X-ray diffraction measurement of the plated layer needs to satisfy the relationship of the following formula (1). When the following formula (1) is satisfied, the (100) plane of the $\eta$-Zn phase is oriented to become parallel to the surface of the plated layer, and red rust resistance and base metal corrosion resistance both improve. The X-ray diffraction intensity more preferably satisfies the following formula (2). When $I(100)_{Zn}/\{I(002)_{Zn} + I(101)_{Zn} + I(100)_{Zn}\}$ is less than 0.15, the orientation of the (100) plane of the $\eta$-Zn phase is not sufficient, and red rust resistance and base metal corrosion resistance become insufficient. In addition, when $I(100)_{Zn}/\{I(002)_{Zn} + I(101)_{Zu} + I(100)_{Zn}\}$ exceeds 3.00, there is a concern that flat portion corrosion resistance may deteriorate.

$$0.15 \leq I(100)_{Zn}/\{I(002)_{Zn} + I(101)_{Zn} + I(100)_{Zn}\} \leq 3.00 \quad \cdots \quad (1)$$

$$0.25 \leq I(100)_{Zn}/\{I(002)_{Zn} + I(101)_{Zn} + I(100)_{Zn}\} \leq 3.00 \quad \cdots \quad (2)$$

In the formula (1) and the formula (2), $I(100)_{Zn}$ represents the diffraction intensity of an $\eta$-Zn phase (100) plane, $I(002)_{Zn}$ represents the diffraction intensity of an $\eta$-Zn phase (002) plane, $I(101)_{Zu}$ represents the diffraction intensity of an $\eta$-Zn phase (101) plane, and $I(100)_{Zn}$ represents the diffraction intensity of an $\eta$-Zn phase (100) plane.

In addition, when the total of one or two of La and Ce in the plated layer is 0.01 to 0.50%, one or more in total of the LaCe-containing intermetallic compound phase, the La-containing intermetallic compound phase, and the Ce-containing intermetallic compound phase are preferably contained in a 200 $\mu$m × 200 $\mu$m visual field of the surface structure of the plated layer in a plane view. More preferably, 3 or more of any one or more of these intermetallic compound phases are contained in the 200 μm × 200 μm visual field. 10 or less of any one or more of the intermetallic compound phases are preferably contained in the 200 μm × 200 μm visual field.

The LaCe-containing intermetallic compound phase is an intermetallic compound phase containing La and Ce, the La-containing intermetallic compound phase is an intermetallic compound phase containing La, and the Ce-containing intermetallic compound phase is an intermetallic compound phase containing Ce. Examples of elements other than La and Ce contained in these intermetallic compound phases include Al, Ca, Si, Mg, and Zn. For example, as these intermetallic compound phases, an Al-Ca-Si-Mg-Zn-(La, Ce) phase, a Ca-Zn-(La, Ce) phase, and the like may be contained. The notation (La, Ce) means one or both of La and Ce. When such an intermetallic compound phase is contained, the (100) plane of the η-Zn phase is strongly oriented to become parallel to the surface of the plated layer, and red rust resistance and base metal corrosion resistance further improve.

A method for measuring the area fraction of [eutectic structure of $\alpha$ phase/$MgZn_2$] is as follows. First, the surface of the plated layer is adjusted to be flat by mechanical polishing. Next, the surface of the plated layer is chemically polished by colloidal polishing, and the polishing is continued until the surface becomes a mirror surface state.

The surface of the plated layer after polishing is observed by SEM.

Specifically, an element distribution image is captured using SEM-EDS at a magnification of 5000 times (a region that is 200 μm in length and 200 μm in width). In this element distribution image, a phase in which Mg and Zn coexist is specified as the $MgZn_2$ phase. In addition, a phase containing Al and Zn is specified as the $\alpha$ phase. Most of the $\alpha$ phase shows a dendritic form. In addition, after [eutectic structure of $\alpha$ phase/$MgZn_2$] containing the $\alpha$ phase and the $MgZn_2$ phase is specified, the area fraction of [eutectic structure of $\alpha$ phase/$MgZn_2$] contained in the visual field is calculated by binarization using image analysis software.

A method for measuring $I(100)_{Zn}/\{I(002)_{Zn} + I(101)_{Zn} + I(100)_{Zn}\}$ in the formula (1) and the formula (2) is as follows. First, the surface of the plated layer is mechanically polished and chemically polished as necessary to bring the surface of the plated layer into a mirror surface state. Next, for example, X-ray diffraction measurement is performed using an X-ray diffractometer (manufactured by Rigaku Corporation (model number RINT-TTR III) under the conditions of X-ray output: 50 kV and 300 mA; copper target; goniometer TTR (horizontal goniometer); slit width of Kβ filter: 0.05 mm; longitudinal limiting slit width: 2 mm; light receiving slit width: 8 mm; and light receiving slit 2: open, and under the measurement conditions of scan speed: 5 deg./min; step width: 0.01 deg; and scan axis: 20 (5 to 90°). Then, for the η-Zn phase, the diffraction intensity (maximum intensity in the range of 38.993 ± 0.2°) from the (100) plane, the diffraction intensity (maximum intensity in the range of 36.297 ± 0.2°) from the (002) plane, and the diffraction intensity (maximum intensity in the range of 43.232 ± 0.2°) from the (101) plane are each measured. The diffraction intensity excludes the background intensity. From the obtained diffraction intensity, $I(100)_{Zn}/\{I(002)_{Zn} + I(101)_{Zn} + I(100)_{Zn}\}$ is determined.

Whether or not the $Mg_2Sn$ phase is contained in the plated layer is determined by whether or not a diffraction peak specific to $Mg_2Sn$ appears when the X-ray diffraction measurement is performed.

Furthermore, a method for measuring the numbers of the LaCe-containing intermetallic compound phase, the La-containing intermetallic compound phase, and the Ce-containing intermetallic compound phase in the surface layer structure of the plated layer is as follows. First, the surface of the plated layer is mechanically polished and chemically polished as necessary to bring the surface of the plated layer into a mirror surface state. Next, a rectangular observed visual field that is 200 μm in length and 200 μm in width is set on the surface of the plated layer. An element distribution image is captured using SEM-EDS in this observed visual field. In this element distribution image, a phase containing one or both of La and Ce is specified as any one of the LaCe-containing intermetallic compound phase, the La-containing intermetallic compound phase, and the Ce-containing intermetallic compound phase. In addition, the numbers of these intermetallic compounds are counted.

The adhesion amount of the plated layer per one surface may be, for example, within a range of 20 to 300 g/m². When the adhesion amount per one surface is set to 20 g/m² or more, flat portion corrosion resistance, red rust resistance, and base metal corrosion resistance of the plated steel material can be further enhanced. On the other hand, when the adhesion amount per one surface is set to 300 g/m² or less, the workability of the plated steel material can be further improved.

Next, the method for producing a plated steel material according to the present embodiment will be described, but the method for producing a plated steel material according to the present embodiment is not particularly limited. For example, according to the manufacturing conditions described below, the plated steel material according to the present embodiment can be obtained.

In a manufacturing method of the plated steel material of the present embodiment, a steel material having irregularity formed on the surface is used as a plating original sheet. This steel material is annealed in a reducing atmosphere, and the steel material immediately after the annealing is immersed in a hot-dip plating bath and then pulled up to form a plated layer on the surface of the steel material. Next, the plated layer is cooled at an average cooling rate of 15 °C/sec or higher until the temperature of the plated layer reaches 340°C from the bath temperature, and then cooled at an average cooling rate of 7 °C/sec or lower in a range of 340 to 320°C while a cooling gas is sprayed at a flux of 15000

($L/min/m^2$) or higher.

For the roughness of the steel material surface that serves as a plating original sheet, the ratio ($L_p/L_0$) of curve length $L_p$ of roughness curve per reference length $L_0$ is set to 1.08 or more. When the roughness ($L_p/L_0$) of the steel material surface is set to 1.08 or more, nucleation sites for crystallizing the ternary eutectic structure are formed near the interface between the plated layer and the steel sheet. The upper limit of ($L_p/L_0$) is preferably 3.00 or less, and may be 2.50 or less. The reference length $L_0$ is the length of the plated layer in the longitudinal direction in a cross-sectional view, and the curve length $L_p$ is the curve length of a roughness curve with respect to the reference length $L_0$ in a cross-sectional view of the plated layer, that is, the total length of the profile of the surface of the plated layer.

The method for adjusting the roughness of the steel material surface is not particularly limited, but the roughness may be adjusted by, for example, rolling the plating original sheet with a rolling roll or a roll for temper rolling, the roll surface of which has been adjusted to a desired roughness to transfer the surface shape of the roll. Alternatively, the roughness may be adjusted by pickling.

The measurement of ($L_p/L_0$) is measured using, for example, a 3D laser microscope (model number: VK-8700), which is manufactured by KEYENCE CORPORATION. Measurement is performed, for example, under the following conditions: scan area: 200 $\mu$m $\times$ 200 $\mu$m, measurement mode: laser confocal, measurement quality: high accuracy, pitch: 0.75 $\mu$m, double scan: ON, optical zoom: 1 time, objective lens name: Plan, $\gamma$ coefficient: 0.45, and offset: 0%. The measuring device used for measuring ($L_p/L_0$) is not limited to the above example.

The steel material that serves as a plating original sheet is annealed in a reducing atmosphere. The reducing atmosphere and the annealing conditions are not particularly limited. By this annealing, the oxide present on the surface of the steel material is removed as much as possible.

Subsequently, the steel material immediately after annealing is immersed in a hot-dip plating bath. The chemical composition of the hot-dip plating bath may be appropriately adjusted to obtain the chemical composition of the plated layer described above. The temperature of the hot-dip plating bath is also not particularly limited. It is possible to appropriately select a temperature at which hot-dip plating can be performed. For example, the plating bath temperature may be set to higher than the melting point of the plating bath by about 20°C or more.

Next, the steel material is pulled up from the hot-dip plating bath. The adhesion amount of the plated layer can be controlled by controlling the pulling speed of the steel material. If necessary, wiping may be performed on the steel material to which the plated layer is adhered to control the adhesion amount of the plated layer. The adhesion amount of the plated layer is not particularly limited, and can be set, for example, within the above-described range.

Next, the plated layer is cooled. Regarding the cooling, the plated layer is first cooled at an average cooling rate of 15 °C/sec or higher until the temperature of the plated layer reaches 340°C from the bath temperature. The average cooling rate until the temperature of the plated layer reaches 340°C from the bath temperature may be 30 °C/sec or lower. The cooling can be performed, for example, by spraying a cooling gas. When the cooling gas is sprayed for cooling, a plurality of blowing nozzles for the cooling gas may be arranged along the conveying path of the steel material, and the cooling gas may be sprayed from the nozzles. When the plated layer is cooled at 15 °C/sec or higher in a range of the bath temperature to 340°C, the generation of the dendritic $\alpha$ phase that is generated at the initial phase of the solidification stage is suppressed. Since the dendrites of the $\alpha$ phase may serve as nucleation sites at the time of the crystallization of the ternary eutectic structure, when the generation of the $\alpha$ phase is suppressed, a ternary eutectic structure is formed from the nucleation sites near the interface between the steel material and the plated layer.

Subsequently, the plated layer is cooled in a range of 340 to 320°C at an average cooling rate of 7 °C/sec or lower while a cooling gas is sprayed at a flux of 15000 ($L/min/m^2$) or higher. At this time, the plated layer may be cooled at an average cooling rate of 2°C or higher. In addition, the flux of the cooling gas during the cooling may be 25000 ($L/min/m^2$) or lower. In this case as well, a plurality of blowing nozzles for the cooling gas are arranged along the conveying path of the steel material. In addition, when the flux is set to 15000 ($L/min/m^2$) or higher, the plated layer is vibrated by the spraying of the cooling gas while the plated layer is not excessively cooled. As a result, the crystallization of a ternary eutectic structure is started from the vicinity of the interface between the plated layer and the steel material as a starting point, and the ternary eutectic structure grows toward the surface of the plated layer.

The cooling gas to be sprayed is not particularly limited, and may be a nonoxidizing gas such as nitrogen, an inert gas such as argon, or air, or a mixed gas thereof.

When the flux of the cooling gas is controlled, the shape of the gas nozzle from which the cooling gas is blown out is set, for example, in a range of a diameter of 1 to 50 mm. The angle formed by the tip of the gas nozzle and the steel sheet is set, for example, in a range of 70 to 110°, more preferably 90° (perpendicular). The distance between the tip of the gas nozzle and the steel sheet is set in a range of 30 to 1000 mm. The shape, angle, and distance of the gas nozzle are merely examples, and are not limited to the above ranges.

There is no need to particularly limit the cooling condition of lower than 320°C, and the cooling may be any of air cooling or natural cooling.

When the plated layer is cooled to satisfy the above conditions, a plated layer satisfying the formula (1) is formed. The reason is presumed as follows.

In the above manufacturing method, irregularity is provided on the surface of the steel material before hot-dip plating, whereby nucleation sites of the ternary eutectic structure are formed in the vicinity of the interface between the steel material and the plated layer. In addition, the steel material immersed in a plating bath is cooled under the above conditions when being pulled up, whereby the nucleation sites that serve as a starting point of the crystallization of the ternary eutectic structure are led to be formed not in the dendrites of the $\alpha$ phase but near the interface between the steel material and the plated layer. In the ternary eutectic structure crystallized from the vicinity of the interface between the steel material and the plated layer as a starting point, crystal orientations are oriented in a constant direction, unlike a case where the dendrites of the $\alpha$ phase are used as a starting point. As a result, it is considered that the (100) plane of the $\eta$-Zn phase contained in the ternary eutectic structure is oriented to be parallel to the surface of the plated layer and the Formula (1) is satisfied.

Examples

Hereinafter, examples of the present invention will be described. However, the conditions in examples are merely one condition example adopted to confirm the operability and effects of the present invention. The present invention is not limited to this one condition example. The present invention can adopt various conditions as long as the object of the present invention is achieved without departing from the gist of the present invention.

As a plating original sheet, a hot-rolled steel sheet having a sheet thickness of 1.6 mm was used. The surface roughness of the hot-rolled steel sheet was controlled in advance using a skin pass mill or the like. For the surface roughness, the ratio $(L_p/L_0)$ of curve length $L_p$ of roughness curve per reference length $L_0$ was adjusted to be 1.05 to 1.57.

The measurement of $(I_p/L_0)$ was measured using a 3D laser microscope (model number: VK-8700), which is manufactured by KEYENCE CORPORATION. As the measurement conditions, measurement was performed under the following conditions: measurement mode: laser confocal, measurement quality: high accuracy, pitch: 0.75 $\mu$m, double scan: ON, optical zoom: 1 time, objective lens name: Plan, $\gamma$ coefficient: 0.45, and offset: 0%.

Next, the plating original sheet having adjusted surface roughness was annealed. The annealing conditions were a soaking temperature of 800°C and a soaking time of 2 minutes in a $N_2$-4%$H_2$ atmosphere. Next, the annealed plating original sheet was aircooled with $N_2$ gas to adjust the temperature at the time of being immersed in the plating bath to be about (plating bath temperature + 20)°C, then, immersed in various hot-dip plating baths, and then lifted at a lifting rate of 20 to 200 mm/sec. At the time of pulling out the plating original sheet, the plating adhesion amount was controlled with a $N_2$ wiping gas. After the steel material was pulled out from the plating bath, the steel material was cooled under the conditions shown in Table 2.

In the cooling in the range of 340 to 320°C, a $N_2$ gas was used as the cooling gas, and the gas flux was controlled as shown in Table 2. The shape of the gas nozzle from which the cooling gas was blown out had a diameter of 6 mm, the angle formed by the tip of the gas nozzle and the steel sheet was the perpendicular, and the distance between the tip of the gas nozzle and the steel sheet was 35 mm.

In this way, plated steel materials Nos. 1 to 47 were manufactured.

The chemical composition of the plated layer was as shown in Table 1. Also, the metallographic structure of the plated layer was evaluated, and the results are shown in Table 3. Furthermore, the red rust resistance and base metal corrosion resistance of the plated steel material were evaluated, and the results are shown in Table 4.

The chemical composition of the plated layer was measured by immersing a sample cut into a 30 mm $\times$ 30 mm size in a 10% HCl aqueous solution to which an inhibitor was added to pickle and peel off the plated layer, and ICP analysis was then performed on elements eluted in the aqueous solution.

The area fraction of [eutectic structure of $\alpha$ phase/MgZn$_2$] was evaluated as follows. First, the surface of the plated layer was polished by mechanical polishing and colloidal polishing until a mirror surface state was formed. Next, the surface of the plated layer was observed at a magnification of 5000 times with a field emission scanning electron microscope (FE-SEM) equipped with an energy dispersive elemental analyzer (EDS) (a region that was 200 $\mu$m in length and 200 $\mu$m), and an element distribution image was captured using EDS. In the element distribution image, a phase in which Mg and Zn coexisted was specified as an MgZn$_2$ phase, a phase containing Al and Zn was specified as an $\alpha$ phase, and [eutectic structure of $\alpha$ phase/MgZn$_2$] in which these phases formed a lamellar shape was specified. In addition, the area fraction of [eutectic structure of $\alpha$ phase/MgZn$_2$] contained in the visual field was calculated by binarization using image analysis software.

A method for measuring $I(100)_{Zn}/\{ I(002)_{Zn} + I(101)_{Zn} + I(100)_{Zn}\}$ in the formula (1) was as follows. First, the surface of the plated layer was brought into a mirror surface state in the same manner as described above. Next, X-ray diffraction measurement was performed using an X-ray diffractometer (manufactured by Rigaku Corporation, model number RINT-TTR III) under the conditions of X-ray output: 50 kV and 300 mA; copper target; goniometer TTR (horizontal goniometer); slit width of K$\beta$ filter: 0.05 mm; longitudinal limiting slit width: 2 mm; light receiving slit width: 8 mm; and light receiving slit 2: open, and under the measurement conditions of scan speed: 5 deg./min; step width: 0.01 deg; and scan axis: 2$\theta$ (5 to 90°). Then, for the $\eta$-Zn phase, the diffraction intensity (maximum intensity in the range of 38.993 $\pm$ 0.2°) from

the (100) plane, the diffraction intensity (maximum intensity in the range of $36.297 \pm 0.2°$) from the (002) plane, and the diffraction intensity (maximum intensity in the range of $43.232 \pm 0.2°$) from the (101) plane were each measured. The diffraction intensity was an intensity excluding the background intensity. From the obtained diffraction intensity, $I(100)_{Zn}/\{I(002)_{Zn} + I(101)_{Zu} + I(100)_{Zn}\}$ was determined.

Whether or not the $Mg_2Sn$ phase was contained in the plated layer was determined by whether or not a diffraction peak specific to $Mg_2Sn$ appeared when the X-ray diffraction measurement was performed.

Furthermore, the numbers of a LaCe-containing intermetallic compound phase, a La-containing intermetallic compound phase, and a Ce-containing intermetallic compound phase in the surface layer structure of the plated layer were measured. First, the surface of the plated layer was brought into a mirror surface state in the same manner as described above. Next, a rectangular observed visual field that was 200 $\mu$m in length and 200 $\mu$m in width was set on the surface of the plated layer. An element distribution image was captured using SEM-EDS in this observed visual field. In this element distribution image, a phase containing one or both of La and Ce was specified as any one of the LaCe-containing intermetallic compound phase, the La-containing intermetallic compound phase, and the Ce-containing intermetallic compound phase. In addition, the numbers of these intermetallic compounds were counted. The results are shown in Table 3. In the "LaCe-containing intermetallic compound phase" column of Table 3, the total number of the LaCe-containing intermetallic compound phase, the La-containing intermetallic compound phase, and the Ce-containing intermetallic compound phase was shown.

The red rust resistance was evaluated as follows. The plated steel material was cut into 100 mm $\times$ 100 mm to produce a test piece. In a region centering the intersection point of the diagonal lines of the test piece and having a diameter of 30 mm, the plated layer was removed by milling to expose the steel sheet (base metal). The region with a diameter of 30 mm where the base metal was exposed was subjected to the cyclic corrosion test specified in the JASO-M609-91 method, and the red rust resistance was evaluated based on the red rust generation state in the region where the base metal was exposed. The evaluation criteria of the red rust resistance are shown below. "AAAA", "AAA", "AA", and "A" were regarded as acceptable.

AAAA: Red rust area fraction of 2% or less in 120 cycles
AAA: Red rust area fraction of more than 2% and 5% or less in 120 cycles
AA: Red rust area fraction of more than 5% and 10% or less in 120 cycles
A: Red rust area fraction of more than 10% and 15% or less in 120 cycles
B: Red rust area fraction of more than 15% in 120 cycles

The base metal corrosion resistance was evaluated as follows. The plated steel material was cut into 100 mm $\times$ 100 mm to produce a test piece. In a region centering the intersection point of the diagonal lines of the test piece and having a diameter of 25 mm, the plated layer was removed by milling to expose the steel sheet (base metal). The region with a diameter of 25 mm where the base metal was exposed was subjected to the cyclic corrosion test specified in the JASO-M609-91 method, and the base metal corrosion resistance was evaluated based on the maximum base metal corrosion depth in the region where the base metal was exposed. The evaluation criteria of the base metal corrosion resistance are shown below. "AAA", "AA", and "A" were regarded as acceptable.

AAA: 0.5 mm or less in 360 cycles
AA: 0.5 mm or less in 240 cycles
A: 0.5 mm or less in 180 cycles
B: More than 0.5 mm in 180 cycles

In Nos. 1 to 32 and 42 to 47 (Examples) according to the present invention, the chemical composition and metallographic structure of the plated layer were appropriately controlled, and both red rust resistance and base metal corrosion resistance were exceptional.

In Comparative Example No. 33, the Al amount was insufficient in the plated layer. Therefore, in No. 31, base metal corrosion resistance was insufficient.

In Comparative Example No. 34, the Al amount was excessive in the plated layer. Therefore, in No. 32, dendrites of the $\alpha$ phase were excessively generated, and the dendrites functioned as nucleation sites of the $\eta$-Zn phase, which made it impossible to secure the orientation of the $\eta$-Zn phase and made both red rust resistance and base metal corrosion resistance insufficient.

In Comparative Example No. 35, the Mg amount was insufficient in the plated layer. Therefore, in No. 33, both red rust resistance and base metal corrosion resistance were insufficient.

In Comparative Example No. 36, the total amount of La and Ce was insufficient in the plated layer. Therefore, in No. 36, the orientation of the $\eta$-Zn phase could not be secured, and base metal corrosion resistance was insufficient.

In Comparative Example No. 37, the Mg amount was excessive in the plated layer. Therefore, in No. 35, red rust resistance was insufficient.

In Comparative Example No. 38, the gas flux amount of the cooling gas was insufficient during cooling in a range of 340 to 320°C. Therefore, in No. 38, the orientation of the η-Zn phase could not be secured, and red rust resistance was insufficient.

In Comparative Example No. 39, the cooling rate exceeded 7 °C/sec in the cooling in the range of 340 to 320°C. Therefore, in No. 39, the orientation of the η-Zn phase could not be secured, and red rust resistance was insufficient.

In Comparative Example No. 40, the cooling rate was lower than 15 °C/sec in the cooling in the range of the bath temperature to 340°C. Therefore, in No. 40, the orientation of the η-Zn phase could not be secured, and red rust resistance was insufficient.

In Comparative Example No. 41, the surface roughness ($(L_p/L_0)$ of the plating original sheet was less than 1.08. Therefore, in No. 41, the orientation of the η-Zn phase could not be secured, and red rust resistance was insufficient.

[Table 1]

| Type | No. | Components of plated layer (mass%) Remainder: Zn and impurity | | | | | | | | | | Other elements | |
|------|-----|-----------|------|------|------|------|------|------|-------|-------|-------------|------|-----------|
| | | Zn | Al | Mg | Sn | Si | Ca | Fe | La | Ce | La + Ce | Kind | Total (%) |
| Example | 1 | Remainder | 6.0 | 3.0 | 0 | 0 | 0 | 0.05 | 0.005 | 0 | 0.005 | - | |
| Example | 2 | Remainder | 6.0 | 3.0 | 0.06 | 0.1 | 0 | 0.05 | 0 | 0.005 | 0.005 | Bi | 0.005 |
| Example | 3 | Remainder | 10.0 | 3.0 | 0 | 0.1 | 0 | 0.06 | 0 | 0.005 | 0.005 | - | |
| Example | 4 | Remainder | 12.0 | 4.5 | 0 | 0.1 | 0.03 | 0.07 | 0.003 | 0.002 | 0.005 | V | 0.009 |
| Example | 5 | Remainder | 12.0 | 3.0 | 0 | 0.2 | 0.02 | 0.08 | 0.002 | 0.005 | 0.007 | - | |
| Example | 6 | Remainder | 12.0 | 5.0 | 0 | 0.1 | 0.03 | 0.08 | 0.010 | 0 | 0.010 | Pb | 0.03 |
| Example | 7 | Remainder | 12.0 | 6.0 | 0 | 0.2 | 0.03 | 0.11 | 0 | 0.012 | 0.012 | Zr | 0.01 |
| Example | 8 | Remainder | 12.0 | 6.0 | 0.01 | 0.2 | 0.02 | 0.08 | 0.012 | 0.012 | 0.024 | Co | 0.008 |
| Example | 9 | Remainder | 13.0 | 5.0 | 0 | 0.2 | 0.02 | 0.12 | 0.022 | 0.022 | 0.044 | Ni | 0.002 |
| Example | 11 | Remainder | 15.0 | 5.0 | 0 | 0.2 | 0.02 | 0.21 | 0.022 | 0.019 | 0.041 | Ag | 0.01 |
| Example | 12 | Remainder | 17.0 | 5.0 | 0 | 0.2 | 0.04 | 0.25 | 0.052 | 0.000 | 0.052 | Li | 0.02 |
| Example | 13 | Remainder | 18.0 | 6.0 | 0.20 | 0.4 | 0.04 | 0.23 | 0 | 0.049 | 0.049 | Sb | 0.08 |
| Example | 14 | Remainder | 19.0 | 6.0 | 0 | 0.3 | 0.05 | 0.16 | 0.042 | 0.044 | 0.086 | P | 0.01 |
| Example | 15 | Remainder | 19.0 | 6.0 | 0 | 0.2 | 0.05 | 0.17 | 0.054 | 0.055 | 0.109 | In | 0.02 |
| Example | 17 | Remainder | 19.0 | 7.0 | 0 | 0.2 | 0.04 | 0.20 | 0 | 0.105 | 0.105 | Mn | 0.01 |
| Example | 18 | Remainder | 20.0 | 15.0 | 0 | 0.3 | 0.05 | 0.31 | 0 | 0.200 | 0.200 | B | 0.005 |
| Example | 19 | Remainder | 20.0 | 6.0 | 0.01 | 0.1 | 0.04 | 0.39 | 0.052 | 0.252 | 0.304 | Sr | 0.02 |
| Example | 20 | Remainder | 21.0 | 6.0 | 0 | 0.1 | 0.04 | 0.42 | 0.051 | 0.251 | 0.302 | - | |
| Example | 21 | Remainder | 22.0 | 6.0 | 0 | 0.4 | 0.04 | 0.37 | 0.053 | 0.250 | 0.303 | Mo | 0.03 |
| Example | 22 | Remainder | 22.0 | 8.0 | 0 | 0.7 | 0.04 | 0.41 | 0.220 | 0.250 | 0.470 | - | |
| Example | 23 | Remainder | 22.0 | 4.0 | 0 | 0.1 | 0.01 | 0.32 | 0.002 | 0.005 | 0.007 | Nb | 0.02 |
| Example | 24 | Remainder | 24.0 | 3.0 | 0 | 0.1 | 0 | 0.21 | 0.002 | 0.005 | 0.007 | - | |
| Example | 25 | Remainder | 22.0 | 4.0 | 0 | 0.1 | 0.01 | 0.44 | 0.002 | 0.005 | 0.007 | - | |
| Example | 26 | Remainder | 23.0 | 8.0 | 0 | 0.7 | 0.04 | 0.55 | 0.052 | 0.052 | 0.104 | Ti | 0.01 |
| Example | 27 | Remainder | 23.0 | 15.0 | 0 | 0.5 | 0.04 | 0.64 | 0.051 | 0.052 | 0.103 | Y | 0.01 |
| Example | 28 | Remainder | 25.0 | 8.0 | 0 | 1.1 | 0.04 | 0.60 | 0.053 | 0.055 | 0.108 | Cu | 0.10 |
| Example | 29 | Remainder | 24.0 | 7.0 | 0 | 1.5 | 0.04 | 0.71 | 0.052 | 0.052 | 0.104 | w | 0.01 |

(continued)

| Type | No. | Zn | Al | Mg | Sn | Si | Ca | Fe | La | Ce | La + Ce | Other elements Kind | Other elements Total (%) |
|---|---|---|---|---|---|---|---|---|---|---|---|---|---|
| | | | | | | | | | | | | Components of plated layer (mass%) Remainder: Zn and impurity | |
| Example | 30 | Remainder | 25.0 | 8.0 | 0 | 2.0 | 0.04 | 1.32 | 0.055 | 0.054 | 0.109 | - | |
| Example | 31 | Remainder | 28.0 | 3.0 | 0.02 | 0.5 | 0.04 | 1.50 | 0.002 | 0.005 | 0.007 | Cr | 0.03 |
| Example | 32 | Remainder | 30.0 | 3.0 | 0 | 0.8 | 0.03 | 1.73 | 0.002 | 0.005 | 0.007 | - | |
| Comparative Example | 33 | Remainder | 5.0 | 4.0 | 0 | 0 | 0 | 0.12 | 0.002 | 0.005 | 0.007 | - | |
| Comparative Example | 34 | Remainder | 32.0 | 7.0 | 0 | 0.1 | 0 | 0.10 | 0.002 | 0.005 | 0.007 | - | |
| Comparative Example | 35 | Remainder | 19.0 | 2.0 | 0 | 0.2 | 0.01 | 0.10 | 0.002 | 0.005 | 0.007 | - | |
| Comparative Example | 36 | Remainder | 19.0 | 5.0 | 0 | 0 | 0.05 | 0.13 | 0 | 0.001 | 0.001 | - | |
| Comparative Example | 37 | Remainder | 19.0 | 16.0 | 0 | 0 | 0.05 | 0.12 | 0.002 | 0.005 | 0.007 | - | |
| Comparative Example | 38 | Remainder | 16.0 | 3.0 | 0 | 0 | 0.01 | 0.81 | 0.002 | 0.005 | 0.007 | - | |
| Comparative Example | 39 | Remainder | 16.0 | 3.0 | 0 | 0 | 0.01 | 0.06 | 0.002 | 0.005 | 0.007 | - | |
| Comparative Example | 40 | Remainder | 16.0 | 4.0 | 0 | 0 | 0.01 | 0.82 | 0.002 | 0.005 | 0.007 | - | |
| Comparative Example | 41 | Remainder | 22.0 | 3.0 | 0 | 0.4 | 0 | 0.49 | 0.002 | 0.005 | 0.007 | - | |
| Example | 42 | Remainder | 15.0 | 6.0 | 0 | 0.2 | 0.02 | 0.21 | 0.041 | 0.02 | 0.06 | - | |
| Example | 43 | Remainder | 19.0 | 6.0 | 0 | 0.2 | 0.03 | 0.22 | 0 | 0.10 | 0.10 | - | |
| Example | 44 | Remainder | 21.0 | 4.0 | 0 | 0.1 | 0.01 | 0.22 | 0.005 | 0.005 | 0.01 | - | |
| Example | 45 | Remainder | 19.0 | 7.5 | 0 | 0.1 | 0.04 | 0.39 | 0.050 | 0.25 | 0.30 | - | |
| Example | 46 | Remainder | 30.0 | 3.0 | 0 | 0 | 0.05 | 14.9 | 0.005 | 0.005 | 0.01 | - | |
| Example | 47 | Remainder | 25.0 | 15.0 | 0 | 0.3 | 1.00 | 0.06 | 0 | 0.20 | 0.20 | B | 0.005 |

Underlined values are outside the scope of the present invention.

[Table 2]

| Type | No. | Bath temperature (°C) | Adhesion amount of plated layer (g/m²) | Surface irregularity of original sheet (L_p/L_0) | Average cooling rate in bath temperature to 340°C (°C/s) | Average cooling rate in 340 to 320°C (°C/s) | Cooling gas flux in 340 to 320°C (L/min/m²) |
|---|---|---|---|---|---|---|---|
| | | | | | Manufacturing conditions | | |
| Example | 1 | 460 | 90 | 1.08 | 15 | 5 | 15000 |
| Example | 2 | 480 | 50 | 1.10 | 20 | 5 | 15000 |
| Example | 3 | 480 | 95 | 1.20 | 20 | 5 | 15000 |
| Example | 4 | 500 | 90 | 1.20 | 20 | 5 | 15000 |

(continued)

| Type | No. | Manufacturing conditions | | | | | |
|---|---|---|---|---|---|---|---|
| | | Bath temperature (°C) | Adhesion amount of plated layer (g/m$^2$) | Surface irregularity of original sheet ($L_p/L_0$) | Average cooling rate in bath temperature to 340°C (°C/s) | Average cooling rate in 340 to 320°C (°C/s) | Cooling gas flux in 340 to 320°C (L/min/m$^2$) |
| Example | 5 | 500 | 95 | 1.22 | 20 | 5 | 15000 |
| Example | 6 | 530 | 95 | 1.21 | 20 | 5 | 15000 |
| Example | 7 | 530 | 98 | 1.20 | 20 | 5 | 15000 |
| Example | 8 | 530 | 95 | 1.40 | 20 | 5 | 15000 |
| Example | 9 | 530 | 97 | 1.23 | 20 | 5 | 15000 |
| Example | 11 | 530 | 120 | 1.20 | 20 | 5 | 15000 |
| Example | 12 | 530 | 88 | 1.57 | 20 | 5 | 15000 |
| Example | 13 | 530 | 78 | 1.26 | 20 | 5 | 15000 |
| Example | 14 | 530 | 87 | 1.20 | 20 | 5 | 15000 |
| Example | 15 | 530 | 95 | 1.22 | 20 | 5 | 15000 |
| Example | 17 | 530 | 90 | 1.24 | 20 | 5 | 15000 |
| Example | 18 | 590 | 98 | 1.40 | 20 | 5 | 15000 |
| Example | 19 | 540 | 78 | 1.42 | 20 | 5 | 15000 |
| Example | 20 | 540 | 250 | 1.25 | 20 | 5 | 15000 |
| Example | 21 | 540 | 89 | 1.43 | 20 | 5 | 15000 |
| Example | 22 | 540 | 88 | 1.40 | 20 | 5 | 15000 |
| Example | 23 | 540 | 95 | 1.08 | 20 | 5 | 15000 |
| Example | 24 | 560 | 180 | 1.20 | 20 | 5 | 15000 |
| Example | 25 | 540 | 95 | 1.26 | 20 | 5 | 15000 |
| Example | 26 | 550 | 90 | 1.27 | 20 | 5 | 15000 |
| Example | 27 | 550 | 95 | 1.25 | 20 | 5 | 15000 |
| Example | 28 | 550 | 89 | 1.23 | 20 | 5 | 15000 |
| Example | 29 | 550 | 99 | 1.22 | 20 | 5 | 15000 |
| Example | 30 | 550 | 95 | 1.21 | 20 | 5 | 15000 |
| Example | 31 | 550 | 89 | 1.26 | 20 | 5 | 15000 |
| Example | 32 | 550 | 95 | 1.28 | 20 | 5 | 15000 |
| Comparative Example | 33 | 450 | 88 | 1.20 | 20 | 5 | 15000 |
| Comparative Example | 34 | 600 | 89 | 1.20 | 20 | 5 | 15000 |
| Comparative Example | 35 | 540 | 90 | 1.20 | 20 | 5 | 15000 |
| Comparative Example | 36 | 540 | 91 | 1.20 | 20 | 5 | 15000 |
| Comparative Example | 37 | 540 | 91 | 1.20 | 20 | 5 | 15000 |

(continued)

| Type | No. | Manufacturing conditions | | | | | |
|---|---|---|---|---|---|---|---|
| | | Bath temperature (°C) | Adhesion amount of plated layer (g/m²) | Surface irregularity of original sheet ($L_p/L_0$) | Average cooling rate in bath temperature to 340°C (°C/s) | Average cooling rate in 340 to 320°C (°C/s) | Cooling gas flux in 340 to 320°C (L/min/m²) |
| Comparative Example | 38 | 520 | 90 | 1.20 | 20 | 5 | <u>13000</u> |
| Comparative Example | 39 | 520 | 100 | 1.20 | 20 | <u>10</u> | 15000 |
| Comparative Example | 40 | 520 | 100 | 1.20 | <u>12</u> | 5 | 15000 |
| Comparative Example | 41 | 560 | 89 | <u>1.05</u> | 20 | 5 | 15000 |
| Example | 42 | 530 | 120 | 1.23 | 20 | 7 | 15000 |
| Example | 43 | 530 | 90 | 1.22 | 20 | 6 | 25000 |
| Example | 44 | 540 | 95 | 1.09 | 20 | 2 | 15000 |
| Example | 45 | 540 | 250 | 1.23 | 30 | 5 | 15000 |
| Example | 46 | 600 | 90 | 1.22 | 20 | 5 | 15000 |
| Example | 47 | 590 | 100 | 1.42 | 20 | 5 | 15000 |
| Underlined values are outside the scope of preferable manufacturing conditions. | | | | | | | |

[Table 3]

| Type | No. | Plated layer | | | |
|---|---|---|---|---|---|
| | | XRD | Surface structure | | $Mg_2Sn$ phase |
| | | $I(100)/(I(002) + I(101) + 1(100))$ | LaCe-containing compound phase (phases) | $\alpha/MgZn_2$ lamellar structure area fraction (%) | Presence and absence |
| Example | 1 | 0.15 | 0 | 0 | Absent |
| Example | 2 | 0.17 | 0 | 1 | Present |
| Example | 3 | 0.17 | 0 | 1 | Absent |
| Example | 4 | 0.16 | 0 | 5 | Absent |
| Example | 5 | 0.20 | 0 | 3 | Absent |
| Example | 6 | 0.25 | 1 | 6 | Absent |
| Example | 7 | 0.26 | 1 | 6 | Absent |
| Example | 8 | 0.33 | 2 | 7 | Present |
| Example | 9 | 0.40 | 1 | 9 | Absent |
| Example | 11 | 0.39 | 2 | 9 | Absent |
| Example | 12 | 0.39 | 3 | 10 | Absent |
| Example | 13 | 0.44 | 3 | 12 | Present |
| Example | 14 | 0.50 | 3 | 14 | Absent |
| Example | 15 | 0.45 | 3 | 22 | Absent |
| Example | 17 | 0.54 | 3 | 23 | Absent |

(continued)

| Type | No. | Plated layer | | | Mg$_2$Sn phase |
| --- | --- | --- | --- | --- | --- |
| | | XRD | Surface structure | | |
| | | I(100)/(I(002) + I(101) + 1(100)) | LaCe-containing compound phase (phases) | $\alpha$/MgZn$_2$ lamellar structure area fraction (%) | Presence and absence |
| Example | 18 | 0.67 | 3 | 23 | Absent |
| Example | 19 | 1.01 | 4 | 23 | Present |
| Example | 20 | 1.22 | 4 | 56 | Absent |
| Example | 21 | 1.50 | 5 | 25 | Absent |
| Example | 22 | 3.00 | 7 | 25 | Absent |
| Example | 23 | 0.18 | 0 | 0 | Absent |
| Example | 24 | 0.19 | 0 | 0 | Absent |
| Example | 25 | 0.20 | 0 | 0 | Absent |
| Example | 26 | 0.80 | 3 | 23 | Absent |
| Example | 27 | 0.50 | 3 | 25 | Absent |
| Example | 28 | 0.66 | 4 | 25 | Absent |
| Example | 29 | 0.71 | 3 | 33 | Absent |
| Example | 30 | 0.65 | 3 | 39 | Absent |
| Example | 31 | 0.20 | 0 | 0 | Present |
| Example | 32 | 0.17 | 0 | 0 | Absent |
| Comparative Example | 33 | 0.16 | 0 | 0 | Absent |
| Comparative Example | 34 | <u>0.12</u> | 0 | 22 | Absent |
| Comparative Example | 35 | 0.15 | 0 | 0 | Absent |
| Comparative Example | 36 | <u>0.13</u> | 0 | 12 | Absent |
| Comparative Example | 37 | 0.15 | 0 | 0 | Absent |
| Comparative Example | 38 | <u>0.08</u> | 0 | 1 | Absent |
| Comparative Example | 39 | <u>0.05</u> | 0 | 1 | Absent |
| Comparative Example | 40 | <u>0.08</u> | 0 | 6 | Absent |
| Comparative Example | 41 | <u>0.13</u> | 0 | 2 | Absent |
| Example | 42 | 0.37 | 2 | 9 | Absent |
| Example | 43 | 0.53 | 3 | 23 | Absent |
| Example | 44 | 0.17 | 0 | 0 | Absent |
| Example | 45 | 1.25 | 10 | 70 | Absent |
| Example | 46 | 0.18 | 0 | 0 | Absent |
| Example | 47 | 0.68 | 4 | 24 | Absent |
| Underlined values are outside the scope of the present invention. | | | | | |

[Table 4]

| Type | No. | Performance | |
|---|---|---|---|
| | | Red rust resistance | Base metal corrosion depth |
| Example | 1 | A | A |
| Example | 2 | AA | A |
| Example | 3 | AA | A |
| Example | 4 | AA | AA |
| Example | 5 | A | AA |
| Example | 6 | AA | AA |
| Example | 7 | AA | AA |
| Example | 8 | AAA | AA |
| Example | 9 | AA | AA |
| Example | 11 | AA | AA |
| Example | 12 | AAA | AAA |
| Example | 13 | AAAA | AAA |
| Example | 14 | AAA | AAA |
| Example | 15 | AAA | AAA |
| Example | 17 | AAA | AAA |
| Example | 18 | AAA | AAA |
| Example | 19 | AAAA | AAA |
| Example | 20 | AAA | AAA |
| Example | 21 | AAA | AAA |
| Example | 22 | AAA | AAA |
| Example | 23 | A | A |
| Example | 24 | A | A |
| Example | 25 | A | A |
| Example | 26 | AAA | AAA |
| Example | 27 | AAA | AAA |
| Example | 28 | AAA | AAA |
| Example | 29 | AAA | AAA |
| Example | 30 | AAA | AAA |
| Example | 31 | AA | A |
| Example | 32 | A | A |
| Comparative Example | 33 | A | B |
| Comparative Example | 34 | B | B |
| Comparative Example | 35 | B | B |
| Comparative Example | 36 | A | B |
| Comparative Example | 37 | B | A |
| Comparative Example | 38 | B | A |
| Comparative Example | 39 | B | A |
| Comparative Example | 40 | B | A |

(continued)

| Type | No. | Performance | |
|---|---|---|---|
| | | Red rust resistance | Base metal corrosion depth |
| Comparative Example | 41 | B | A |
| Example | 42 | AAA | AA |
| Example | 43 | AAA | AAA |
| Example | 44 | A | A |
| Example | 45 | AAA | AAA |
| Example | 46 | A | A |
| Example | 47 | AAA | AAA |

INDUSTRIAL APPLICABILITY

The plated steel material of the present disclosure is exceptional in terms of red rust resistance and base metal corrosion resistance and is thus highly industrially applicable.

REFERENCE SIGNS LIST

1 Plated steel material

11 Steel material

12 Plated layer

**Claims**

1.  A plated steel material comprising:

a steel material; and
a plated layer on the steel material,
wherein the plated layer has a chemical composition containing, in terms of mass%,
Al: 6.0 to 30.0%,
Mg: 3.0 to 15.0%,
Fe: 0.01 to 15.00%,
Si: 0 to 2.0%,
Ca: 0 to 2.00%,
one or two of La and Ce: 0.005 to 0.500% in total,
one or two or more elements selected from an element group of Sb: 0 to 0.50%, Pb: 0 to 0.50%, Cu: 0 to 1.00%, Sn: 0 to 1.00%, Ti: 0 to 1.00%, Cr: 0 to 1.00%, Nb: 0 to 1.00%, Zr: 0 to 1.00%, Ni: 0 to 1.000%, Mn: 0 to 1.00%, Mo: 0 to 1.00%, Ag: 0 to 1.00%, Li: 0 to 1.00%, B: 0 to 0.500%, Y: 0 to 0.50%, P: 0 to 0.50%, Sr: 0 to 0.50%, Co: 0 to 0.500%, Bi: 0 to 0.500%, In: 0 to 0.50%, V: 0 to 0.500%, and W: 0 to 0.50%, in an amount of 0 to 5.0% in total, and
the remainder: Zn and an impurity, and
the plated layer has a diffraction intensity obtained from a result of X-ray diffraction measurement, the diffraction intensity satisfying formula (1) below:

$$0.15 \leq I(100)_{Zn}/\{I(002)_{Zn} + I(101)_{Zn} + I(100)_{Zn}\} \leq 3.00 \quad \cdots \quad (1)$$

in the formula (1), $I(100)_{Zn}$ represents an $\eta$-Zn phase (100) diffraction intensity, $I(002)_{Zn}$ represents an $\eta$-Zn phase (002) diffraction intensity, $I(101)_{Zn}$ represents an $\eta$-Zn phase (101) diffraction intensity, and $I(100)_{Zn}$ represents an $\eta$-Zn phase (100) diffraction intensity.

2. The plated steel material according to claim 1, wherein Al and Mg in the plated layer are Al: 10.0 to 25.0% and Mg: 4.5 to 15.0%, respectively.

3. The plated steel material according to claim 1 or claim 2, wherein

   a total of one or two of La and Ce in the plated layer is 0.010 to 0.500%, and
   a number of one or more of a LaCe-containing intermetallic compound phase, a La-containing intermetallic compound phase, and a Ce-containing intermetallic compound phase in a 200 $\mu$m × 200 $\mu$m visual field of a surface structure of the plated layer in a plane view is 1 or more.

4. The plated steel material according to any one of claims 1 to 3, wherein

   a total of one or two of La and Ce in the plated layer is 0.050 to 0.500%, and
   a number of one or more of a LaCe-containing intermetallic compound phase, a La-containing intermetallic compound phase, and a Ce-containing intermetallic compound phase in a 200 $\mu$m × 200 $\mu$m visual field of a surface structure of the plated layer in a plane view is 3 or more.

5. The plated steel material according to any one of claims 1 to 4, wherein an area fraction of [$\alpha$/MgZn$_2$ eutectic structure] contained in a surface structure of the plated layer in a plane view is 5 to 70%.

6. The plated steel material according to any one of claims 1 to 5, wherein a diffraction intensity of the plated layer obtained from a result of X-ray diffraction measurement satisfies formula (2) below:

$$0.25 \leq I(100)_{Zn}/\{I(002)_{Zn} + I(101)_{Zn} + I(100)_{Zn}\} \leq 3.00 \quad \cdot\cdot\cdot \quad (2).$$

7. The plated steel material according to any one of claims 1 to 6, wherein

   Sn in the plated layer is Sn: 0.05 to 0.50%, in terms of mass%, and
   a Mg$_2$Sn phase is detected by a result of X-ray diffraction measurement of the plated layer.

FIG. 1

# EP 4 696 805 A1

## INTERNATIONAL SEARCH REPORT

International application No.

**PCT/JP2024/014675**

### A. CLASSIFICATION OF SUBJECT MATTER

*C23C 2/06*(2006.01)i; *C22C 18/00*(2006.01)i; *C22C 18/04*(2006.01)i; *C23C 2/02*(2006.01)n; *C23C 2/26*(2006.01)n
FI: C23C2/06; C22C18/04; C22C18/00; C23C2/02; C23C2/26

According to International Patent Classification (IPC) or to both national classification and IPC

### B. FIELDS SEARCHED

Minimum documentation searched (classification system followed by classification symbols)

C23C2/06; C22C18/00; C22C18/04; C23C2/02; C23C2/26

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2005/056863 A1 (SUMITOMO METAL INDUSTRIES, LTD.) 23 June 2005 (2005-06-23)<br>paragraphs [0034]-[0035], [0045] | 1-7 |
| A | JP 2001-355053 A (NIPPON STEEL CORPORATION) 25 December 2001 (2001-12-25)<br>paragraphs [0034]-[0040] | 1-7 |
| A | JP 55-021564 A (KAWASAKI SEITETSU KK) 15 February 1980 (1980-02-15)<br>pp. 1, 3-4 | 1-7 |

☐ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **11 June 2024** | **18 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

22

## INTERNATIONAL SEARCH REPORT
### Information on patent family members

International application No.

**PCT/JP2024/014675**

| Patent document cited in search report | Publication date (day/month/year) | Patent family member(s) | Publication date (day/month/year) |
|---|---|---|---|
| WO 2005/056863 A1 | 23 June 2005 | (Family: none) | |
| JP 2001-355053 A | 25 December 2001 | (Family: none) | |
| JP 55-021564 A | 15 February 1980 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023064063 A
- JP 2021085086 A

- WO 2011001662 A